# EUROPEAN PATENT APPLICATION

(11) **EP 4 318 794 A1**
(43) Date of publication of application: **07.02.2024**
(21) Application number: 23760274.3
(22) Date of filing: 31.01.2023
(51) Int. Cl.: H01M 50/593, H01M 50/586, H01M 50/538, H01M 50/124, H01M 50/107, H01M 50/55, H01M 50/559, H01M 50/188, H01M 50/179, H01M 50/342

(54) **CYLINDRICAL SECONDARY BATTERY, AND BATTERY PACK AND VEHICLE COMPRISING SAME**

(30) Priority: 28.02.2022 KR 20220025919
(71) Applicant: LG ENERGY SOLUTION, LTD., Seoul 07335 (KR)
(72) Inventor: HWANGBO, Kwang Su, Daejeon 34122 (KR); KIM, Do Gyun, Daejeon 34122 (KR); JO, Min Ki, Daejeon 34122 (KR); KANG, Bo Hyun, Daejeon 34122 (KR)
(74) Representative: Goddar, Heinz J.
(86) International application number: PCT/KR2023/001415
(87) International publication number: WO 2023/163400

(57) **Abstract**

According to the present technology, it is possible to obtain a cylindrical secondary battery having a simple electrical connection structure in which a through terminal is provided and a positive electrode terminal and a negative electrode terminal are positioned in the same direction.

In addition, in the cylindrical secondary battery according to the present technology, a thin insulating coating layer is provided on an inner wall of a battery can, thereby increasing capacity and improving vibration characteristics.

## Description

### [Technical Field]

The present invention relates to a cylindrical secondary battery, a battery pack including the cylindrical secondary battery, and a vehicle including the battery pack.

More specifically, the present invention relates to a cylindrical secondary battery having a structure in which both a positive electrode terminal and a negative electrode terminal are disposed on one side of the cylindrical secondary battery, wherein an insulating coating layer capable of efficiently insulating an electrode assembly and a current collecting plate is provided in a battery can, and a battery pack including the cylindrical secondary battery, and a vehicle including the battery pack.

This application claims the benefit of priority based on Korean Patent Application No. 10-2022-0025919, filed on February 28, 2022, and the entire content of the Korean patent application is incorporated herein by reference.

### [Background Art]

In the case of manufacturing a battery pack using a cylindrical secondary battery, a plurality of cylindrical secondary batteries are usually disposed upright in a housing, and an upper end and a lower end of the cylindrical secondary battery are respectively used as a positive electrode terminal and a negative electrode terminal to mutually electrically connect the plurality of cylindrical secondary batteries.

In other words, in conventional cylindrical secondary batteries, it is common that a bottom surface of a battery can is used as a negative electrode terminal, and a top cap covering an upper opening of the battery can is used as a positive electrode terminal.

However, when the positive electrode terminal and the negative electrode terminal of the cylindrical secondary battery are positioned at opposite sides, electrical connection components, such as bus bars for electrically connecting the plurality of cylindrical secondary batteries, need to be applied to both an upper portion and a lower portion of the cylindrical secondary battery. In addition, this causes an increase in the number of applied components and the complexity of their structures because components for insulation and components for securing waterproofness or sealing properties need be separately applied to an upper portion and a lower portion of a battery pack.

In order to solve such a complicated structure, the present applicant has proposed a cylindrical secondary battery structure in which a positive electrode terminal and a negative electrode terminal are applied in the same direction.

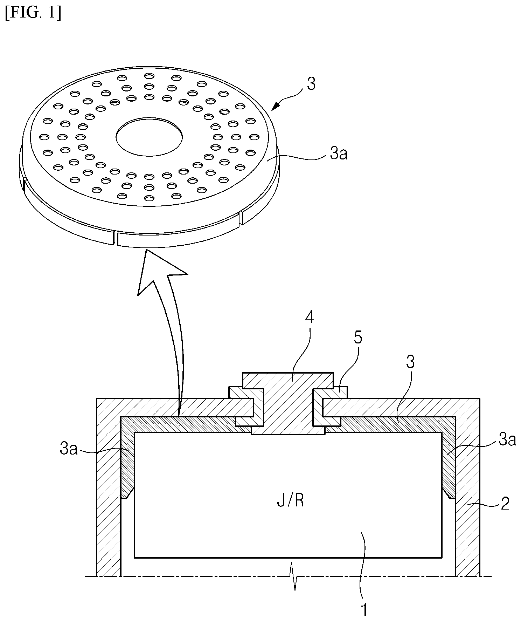

FIG. 1 is a schematic diagram showing a simplified upper structure of such a cylindrical secondary battery.

However, in FIG. 1, a cap-shaped insulator 3 is applied to insulate an electrode assembly 1 or a current collecting plate (not shown) coupled thereto from a battery can 2. In other words, the insulator 3 has a form that completely surrounds a current collecting plate and the electrode assembly 1 in order to insulate an inner wall of the battery can 2 from the electrode assembly 1, and the like, and the insulator 3 has a form having a side portion 3a, which is interposed between the current collecting plate/electrode assembly and the inner wall of the battery can, formed on both side portions thereof. Since this form has a volume of the electrode assembly 1 reduced as much as a thickness of the side portion 3a, capacity is reduced. In addition, since the electrode assembly 1 and the battery can 2 are spaced the thickness of the side portion 3a from each other, there is a problem that the vibration characteristics of the secondary battery are degraded.

Therefore, there is a need for the development of a cylindrical secondary battery having an insulating structure capable of preventing the reduction in capacity or the reduction in vibration characteristics.

### [Related Art Document]

### [Patent Document]

(Patent document 1) Korean Patent Application Laid-Open No 10-2020-0041625

### [Description of the Invention]

### [Technical Problem]

The present invention is directed to providing, as a cylindrical secondary battery having a structure in which a positive electrode terminal and a negative electrode terminal are applied to the same direction, a cylindrical secondary battery having an insulating structure capable of preventing a reduction in capacity and a reduction in vibration characteristics.

### [Technical Solution]

A cylindrical secondary battery according to one embodiment of the present invention for achieving the objects includes an electrode assembly including a first electrode tab and a second electrode tab, a battery can configured to accommodate the electrode assembly and electrically connected to the electrode assembly, a through terminal passing through one surface of the battery can and electrically connected to the electrode assembly, a first current collecting plate having a first surface coupled to the first electrode tab and a second surface coupled to the through terminal, an insulator interposed between the first current collecting plate and the battery can, and a cap plate covering an opening of the battery can, wherein an insulating coating layer is provided along an inner circumferential surface of a sidewall of the battery can facing a side portion of the first electrode tab and a side portion of the first current collecting plate.

The through terminal may be electrically connected to the first electrode tab having a first polarity, and the battery can may be electrically connected to the second electrode tab having a second polarity different from the first polarity.

The through terminal may be positioned on a central portion of the one surface of the battery can positioned on an opposite side of the opening.

The through terminal may include a terminal exposure portion extending outward from the battery can and a terminal insertion portion passing through an upper surface of the battery can.

The through terminal may be rivet-coupled to an inner surface of the battery can.

A central region of the terminal insertion portion may be coupled to the first current collecting plate.

The through terminal may pass through the insulator and may be coupled to the first current collecting plate.

The insulator may be formed in a flat plate shape having a through hole through which the through terminal passes.

The insulating coating layer may be provided to extend to the inner circumferential surface of the sidewall of the battery can and/or an inner surface of an upper plate of the battery can so as to exceed an inner circumferential region of the sidewall of the battery can facing the side portion of the first electrode tab and the side portion of the first current collecting plate.

The insulating coating layer may include one or more selected from the group consisting of epoxy, ceramic, and Teflon.

The cylindrical secondary battery may further include an insulating gasket interposed between the battery can and the through terminal to insulate the through terminal from the battery can.

The insulating gasket may include a gasket exposure portion extending outward from the battery can and a gasket insertion portion passing through an upper surface of the battery can.

The cap plate may include a venting portion which is broken when an internal pressure of the battery can is increased to a certain level or more and through which a gas is discharged.

A battery pack according to one embodiment of the present invention may include a plurality of cylindrical secondary batteries identical to the cylindrical secondary battery and a pack housing configured to accommodate the plurality of cylindrical secondary batteries.

A vehicle according to one embodiment of the present invention may include the battery pack.

### [Advantageous Effects]

According to the present invention, a cylindrical secondary battery having a simple electrical connection structure in which a positive electrode terminal and a negative electrode terminal are disposed in the same direction can be obtained.

In addition, according to the present invention, by providing a thin insulating coating layer, it is possible to increase capacity and improve vibration characteristics of the cylindrical secondary battery.

However, the effects that can be obtained through the present invention are not limited to the above-described effects, and other technical effects that are not mentioned will be clearly understood by those skilled in the art from the description of the invention described below.

### [Brief Description of the Drawings]

Since the accompanying drawings of the present specification illustrate exemplary embodiments of the present invention and serve to further understand the technical idea of the present invention together with the detailed description of the present invention to be described below, the present invention should not be construed as being limited to the matters shown in these drawings.
FIG. 1 is a schematic diagram showing a simplified upper structure of a cylindrical secondary battery proposed by the present applicant.
FIG. 2 is a view showing an exterior of a cylindrical secondary battery according to one embodiment of the present invention.
FIG. 3 is a cross-sectional view showing an internal structure of the cylindrical secondary battery according to one embodiment of the present invention.
FIG. 4 is a partial cross-sectional view showing an upper structure of the cylindrical secondary battery according to one embodiment of the present invention.
FIG. 5 is a partial cross-sectional view showing a formation position of an insulating coating layer which is a main part of the present invention.
FIGS. 6 and 7 are partial cross-sectional views showing other examples of the formation position of the insulating coating layer which is the main part of the present invention.
FIG. 8 is a view showing a lower surface of the cylindrical secondary battery according to one embodiment of the present invention.
FIG. 9 is a view showing a battery pack according to one embodiment of the present invention.
FIG. 10 is a view showing a vehicle according to one embodiment of the present invention.

### [Mode of the invention]

Hereinafter, exemplary embodiments of the present invention will be described in detail with reference to the accompanying drawings. Prior to this, terms or words used in the present specification and claims should not be construed as being limited to the usual or dictionary meaning and should be construed as the meaning and concept consistent with the technical spirit of the present invention based on the principle that the inventors may appropriately define the concept of the terms in order to describe their invention in the best mode. Therefore, since the embodiments described in the present specification and the configurations shown in the drawings are only some of the most exemplary embodiments of the present invention and do not represent all of the technical spirit of the present invention, it should be understood that various equivalents and modified examples capable of replacing the embodiments and the configurations shown the drawings at the time of this application may be present.

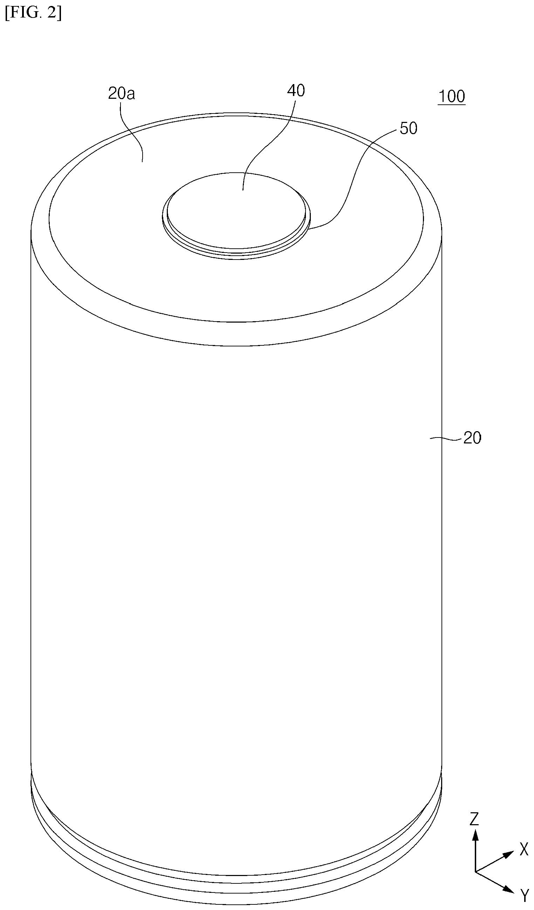

Referring to FIGS. 2 to 4, a cylindrical secondary battery 100 according to one embodiment of the present invention includes an electrode assembly 10, a battery can 20, a cap plate 30, a through terminal 40, a first current collecting plate 60, and an insulator 70. In addition to the above-described components, the cylindrical secondary battery 100 may further include an insulating gasket 50 and/or a second current collecting plate 80.

The electrode assembly 10 includes a first electrode having a first polarity, a second electrode having a second polarity, and a separator interposed between the first electrode and the second electrode. The first electrode is a positive electrode or a negative electrode, and the second electrode corresponds to an electrode having a polarity opposite to that of the first electrode. The electrode assembly 10 may have, for example, a jelly-roll shape. In other words, the electrode assembly 10 may be manufactured by winding a stack structure provided by sequentially stacking the first electrode, the separator, and the second electrode at least once about a winding center C. In this case, an additional separator may be provided on an outer circumferential surface of the electrode assembly 10 in order to insulate the electrode assembly 10 from the battery can 20.

The first electrode includes a first electrode active material applied on one surface or both surfaces of a first electrode current collector. An uncoated portion on which the first electrode active material is not applied is present on one end of the first electrode current collector in a width direction (direction parallel to a Z-axis). The uncoated portion serves as a first electrode tab 11. The first electrode tab 11 is provided above the electrode assembly 10 accommodated in the battery can 20 in a height direction (direction parallel to the Z-axis).

The second electrode includes a second electrode active material applied on one surface or both surfaces of a second electrode current collector. An uncoated portion on which the second electrode active material is not applied is present on the other end of the second electrode current collector in the width direction (direction parallel to the Z-axis). The uncoated portion serves as a second electrode tab 12. The second electrode tab 12 is provided under the electrode assembly 10 accommodated in the battery can 20 in the height direction.

In the present invention, the positive electrode active material applied on a positive electrode plate and the negative electrode active material applied on a negative electrode plate may be used without limitation as long as they are known active materials in the art.

In one example, the positive electrode active material may include an alkali metal compound indicated by a general formula A[AₓM_{y}]O_{2+z} (A includes at least one element of Li, Na, and K; M includes at least one element selected from Ni, Co, Mn, Ca, Mg, Al, Ti, Si, Fe, Mo, V, Zr, Zn, Cu, Sc, Zr, Ru, and Cr; x≥0, 1≤x+y≤2, -0.1≤z≤2; stoichiometric coefficients of components included in x, y, z and M are selected so that the compound maintain electrical neutrality).

The positive electrode active material may include primary particles and/or secondary particles in which the primary particles are aggregated.

In one example, as the negative electrode active material, a carbon material, lithium metal or a lithium metal compound, silicon or a silicon compound, tin or a tin compound, or the like may be used. Metal oxides, such as TiO₂ and SnO₂ having a potential of lower than 2 V may also be used as the negative electrode active material. As the carbon material, any of low crystalline carbon, high crystalline carbon, and the like may be used.

As the separator, a porous polymer film, for example, a porous polymer film made of polyolefin-based polymers, such as ethylene homopolymer, propylene homopolymer, ethylene/butene copolymer, ethylene/hexene copolymer, and ethylene/methacrylate copolymer, may be used alone or as a form in which a plurality of porous polymer films are stacked. As another example, as the separator, a typical porous nonwoven fabric, for example, a nonwoven fabric made of glass fiber, polyethylene terephthalate fiber, or the like having a high melting point may be used.

At least one surface of the separator may include a coating layer having inorganic particles.

In addition, the separator itself may also be provided of the coating layer having inorganic particles. The particles constituting the coating layer may have a structure combined with a binder so that an interstitial volume is present between adjacent particles.

An electrolyte may be a salt having a structure such as A⁺B⁻⁻. Here, A⁺ includes alkali metal cations, such as Li⁺, Na⁺, and K⁺, or ions of combinations thereof. In addition, B⁻⁻ includes one or more anions selected from the group consisting of F⁻⁻, Cl⁻⁻, Br⁻⁻, I⁻⁻, NO₃⁻⁻, N(CN)₂^{--,} BF₄⁻⁻, ClO₄⁻⁻, AlO4⁻⁻, AlCl₄⁻⁻, PF₆⁻⁻, SbF₆⁻⁻, AsF₆⁻⁻, BF₂C₂O₄⁻⁻, BC₄O₈⁻⁻, (CF₃)₂PF₄⁻⁻, (CF₃)₃PF₃⁻, (CF₃)₄PF₂⁻⁻, (CF₃)₅PF⁻⁻, (CF₃)₆P⁻⁻, CF₃SO₃⁻⁻, C₄F₉SO₃⁻⁻, CF₃CF₂SO₃⁻⁻, (CF₃SO₂)₂N^{- -}, (FSO₂)₂N⁻⁻, CF₃CF₂(CF₃)₂CO⁻⁻, (CF₃SO₂)₂CH⁻⁻, (SF₅)₃C⁻⁻, (CF₃SO₂)₃C⁻⁻, CF₃(CF₂)₇SO₃⁻⁻, CF₃CO₂⁻⁻, CH₃CO₂⁻⁻, SCN--, and (CF₃CF₂SO₂)₂N⁻⁻.

The electrolyte may also be used after being dissolved in an organic solvent.

Referring to FIGS. 2 to 4, the battery can 20 is a substantially cylindrical container having an opening provided at a lower side and is made of, for example, a conductive metal material. The lower portion of the battery can 20 in which the opening is provided will be referred to as an opened end. A side surface (outer circumferential surface) and an upper surface of the battery can 20 may be integrally provided. An upper surface (parallel to an X-Y plane) of the battery can 20 has a substantially flat shape. An upper surface positioned opposite to the opening (or the opened end) will be referred to as a closed end. The battery can 20 accommodates the electrode assembly 10 through the opening provided in the lower portion and also accommodates the electrolyte.

The battery can 20 is electrically connected to the electrode assembly 10. The battery can 20 is, for example, electrically connected to the second electrode tab 12 of the electrode assembly 10.

In this case, the battery can 20 has the same polarity as the second electrode tab 12.

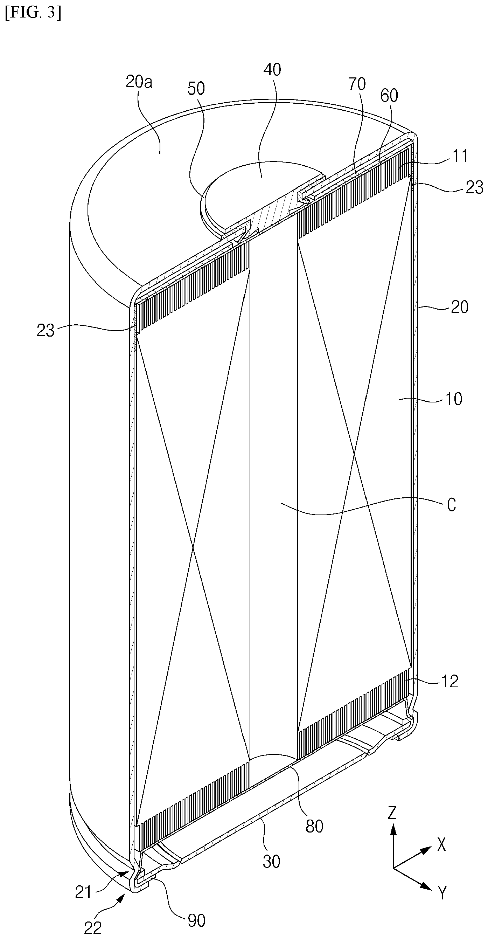

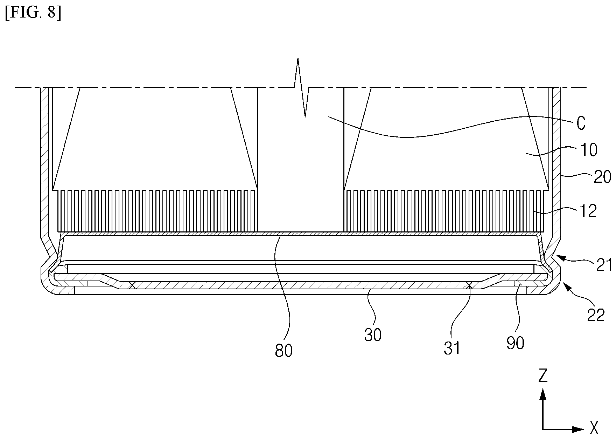

Referring to FIGS. 3 and 8, the battery can 20 may include a beading portion 21 and a crimping portion 22 provided on a lower end portion thereof. The beading portion 21 has a shape in which a circumference of an outer circumferential surface of the battery can 20 is pressed to a predetermined depth. The beading portion 21 is provided below the electrode assembly 10. The beading portion 21 may prevent the electrode assembly 10 having a size substantially corresponding to a width of the battery can 20 from passing through the opening formed in the lower end of the battery can 20 and serve as a support on which the cap plate 30 is seated.

The crimping portion 22 is formed below the beading portion 21. The crimping portion 22 has an extended and bent shape to surround an outer circumferential surface and a lower surface of the cap plate 30 disposed below the beading portion 21.

However, the present invention does not preclude a case in which the battery can 20 does not include the beading portion 21 an/or the crimping portion 22. In the present invention, when the battery can 20 does not include the beading portion 21 and/or the crimping portion 22, the fixing of the electrode assembly 10, the fixing of the cap plate 30, and/or the sealing of the battery can 20 may be achieved through the additional application of a component serving as a stopper for the electrode assembly 10, the additional application of a structure on which the cap plate 30 may be seated, and/or the welding between the battery can 20 and the cap plate 30.

Referring to FIGS. 3 and 8, the cap plate 30 may be made of, for example, a metal material in order to secure stiffness. The cap plate 30 covers the opening (or the opened end) formed in the lower end of the battery can 20. In other words, the cap plate 30 forms a lower surface of the cylindrical secondary battery 100. In the cylindrical secondary battery 100 according to the present invention, the cap plate 30 does not have a polarity even when the cap plate 30 is made of a conductive metal material. When the cap plate 30 does not have the polarity, it may mean that the cap plate 30 is electrically insulated from the battery can 20 and the through terminal 40. Therefore, the cap plate 30 does not serve as the positive electrode terminal or the negative electrode terminal. Therefore, the cap plate 30 does not need to be electrically connected to the electrode assembly 10 and the battery can 20, and the material of the cap plate 30 does not necessarily need to be a conductive metal.

When the battery can 20 according to the present invention includes the beading portion 21, the cap plate 30 may be seated on the beading portion 21 formed in the battery can 20. In addition, when the battery can 20 according to the present invention includes the crimping portion 22, the cap plate 30 is fixed by the crimping portion 22. An airtightness gasket 90 may be interposed between the cap plate 30 and the crimping portion 22 of the battery can 20 in order to secure the airtightness of the battery can 20.

Meanwhile, as described above, the battery can 20 according to the present invention may not include the beading portion 21 and/or the crimping portion 22, and in this case, the airtightness gasket 90 may be interposed between a fixing structure provided on the opened portion of the battery can 20 and the cap plate 30 in order to secure the airtightness of the battery can 20.

Referring to FIG. 8, the cap plate 30 may further include a venting portion 31 formed to prevent an internal pressure from increasing beyond a preset value due to a gas generated inside the battery can 20. The venting portion 31 corresponds to a region of the cap plate 30 having a smaller thickness than surrounding regions. The venting portion 31 is structurally weaker than the surrounding regions. Therefore, when the cylindrical secondary battery 100 is abnormal and the internal pressure of the battery can 20 increases to a certain level or more, the venting portion 31 is broken and the gas generated inside the battery can 20 is discharged. The venting portion 31 may be formed, for example, by notching one surface or both surfaces of the cap plate 30 to partially reduce the thickness of the battery can 20.

The cylindrical secondary battery 100 according to one embodiment of the present invention has a structure in which both of the positive electrode terminal and the negative electrode terminal are present on the upper portion thereof, and thus has a more complicated upper structure than a lower structure. Therefore, the venting portion 31 may be formed on the cap plate 30 forming the lower surface of the cylindrical secondary battery 100 in order to smoothly discharge the gas generated inside the battery can 20. As shown in FIG. 8, a lower end of the cap plate 30 is preferably positioned above the lower end of the battery can 20. In this case, even when the lower end of the battery can 20 is in contact with the ground or a bottom surface of a housing for constituting a module or a pack, the cap plate 30 is not in contact with the ground or the bottom surface of the housing for constituting the module or the pack. Therefore, it is possible to prevent a phenomenon in which a pressure required for breaking the venting portion 31 differs from a design value due to a weight of the cylindrical secondary battery 100, thereby securing the smoothness of the breakage of the venting portion 31.

Referring to FIGS. 2 to 4, the through terminal 40 is made of a conductive metal material and passes through a plane (plane parallel to the X-Y plane) positioned on the upper surface of the battery can 20, that is, an opposite side of the opening of the battery can 20. The through terminal 40 is electrically connected to, for example, the first electrode tab 11 of the electrode assembly 10. In this case, the through terminal 40 has a first polarity. Therefore, the through terminal 40 may serve as a first electrode terminal in the cylindrical secondary battery 100 according to the present invention. When the through terminal 40 has the first polarity as described above, the through terminal 40 is electrically insulated from the battery can 20 having a second polarity. The electrical insulation between the through terminal 40 and the battery can 20 may be implemented in various methods. For example, the insulation may be implemented by the insulating gasket 50 interposed between the through terminal 40 and the battery can 20.

The through terminal 40 includes a terminal exposure portion 41 and a terminal insertion portion 42. The terminal exposure portion 41 is exposed to an outside of the battery can 20. The terminal exposure portion 41 may be positioned on a substantially central portion of the upper surface of the battery can 20. A maximum width of the terminal exposure portion 41 may be formed to be greater than a maximum width of a hole formed in the battery can 20 due to the through terminal 40 passing through the battery can 20. The terminal insertion portion 42 may be electrically connected to the first electrode tab 11 through the substantially central portion of the upper surface of the battery can 20. A region around an edge of the terminal insertion portion 42 may be rivet-coupled to the inner surface of the battery can 20. In other words, the region around the edge of the terminal insertion portion 42 may have a shape that is bent toward the inner surface of the battery can 20, and thus a maximum width of an end of the terminal insertion portion 42 may be formed to be greater than a maximum width of the hole of the battery can 20 formed by the terminal insertion portion 42 passing through the battery can 20.

Meanwhile, the cylindrical secondary battery 100 according to the present invention includes the first current collecting plate 60, wherein a first surface of the first current collecting plate 60 is coupled to the first electrode tab 11, and a second surface of thereof is coupled to the through terminal 40. In this case, a central region of the terminal insertion portion 42 of the through terminal 40 may be coupled to the second surface (upper surface) of the first current collecting plate 60. The central region of the terminal insertion portion 42 may have, for example, a substantially cylindrical shape. A diameter of a bottom surface of the central region of the terminal insertion portion 42 may be set to about 6.2 mm.

The coupling between the bottom surface of the central region of the terminal insertion portion 42 and the first current collecting plate 60 may be performed by, for example, laser welding or ultrasonic welding.

The laser welding may be performed by radiating a laser through a hole formed in the winding center C of the electrode assembly 10 to form a laser welding line on one surface of the first current collecting plate 60.

In one embodiment of the present invention, the upper surface of the battery can 20 and the through terminal 40 exposed to the outside of the battery can 20 have opposite polarities and toward the same direction. In addition, a step may be formed between the through terminal 40 and the upper surface of the battery can 20. Specifically, when the entire upper surface of the battery can 20 has a flat shape or a shape that protrudes upward from the center of the battery can 20, the terminal exposure portion 41 of the through terminal 40 may further protrude upward than the upper surface of the battery can 20. Conversely, when the upper surface of the battery can 20 has a shape that is concavely recessed downward from the center thereof, that is, in a direction toward the electrode assembly 10, the upper surface of the battery can 20 may further protrude upward than the terminal exposure portion 41 of the through terminal 40.

Meanwhile, in the case where the upper surface of the battery can 20 has the shape that is concavely recessed downward from the center thereof, that is, in the direction toward the electrode assembly 10, the upper surface of the battery can 20 and the upper surface of the terminal exposure portion 41 may form the same plane depending on a recessed depth and a thickness of the terminal exposure portion 41 of the through terminal 40. In this case, the step may not be formed between the upper surface of the battery can 20 and the terminal exposure portion 41.

The insulating gasket 50 is interposed between the battery can 20 and the through terminal 40 to prevent the battery can 20 and the through terminal 40 having the opposite polarities from being in contact with each other. Therefore, the upper surface of the battery can 20 having the substantially flat shape may serve as the second electrode terminal of the cylindrical secondary battery 100.

The insulating gasket 50 includes a gasket exposure portion 51 and a gasket insertion portion 52. The gasket exposure portion 51 is interposed between the terminal exposure portion 41 of the through terminal 40 and the battery can 20. The gasket insertion portion 52 is interposed between the terminal insertion portion 42 of the through terminal 40 and the battery can 20. The gasket insertion portion 52 may be deformed when the terminal insertion portion 42 is riveted and may be in close contact with the inner surface of the battery can 20. The insulating gasket 50 may be made of, for example, an insulating resin material.

In the case where the insulating gasket 50 is made of a resin material, the insulating gasket 50 may be coupled to the battery can 20 and the through terminal 40 by thermal fusion.

In this case, it is possible to increase airtightness at a coupled interface between the insulating gasket 50 and the through terminal 40 and a coupled interface between the insulating gasket 50 and the battery can 20.

The entire region of the upper surface of the battery can 20 except for the region occupied by the through terminal 40 and the insulating gasket 50 corresponds to a second electrode terminal 20a having an opposite polarity to the through terminal 40.

A cylindrical sidewall of the battery can 20 may be formed in one piece with the second electrode terminal 20a so that there is no discontinuous portion between the cylindrical sidewall of the battery can 20 and the second electrode terminal 20a. A connection from the sidewall of the battery can 20 to the second electrode terminal 20a may be a smooth curve. However, the present invention is not limited thereto, and the connection portion may include at least one corner having a predetermined angle.

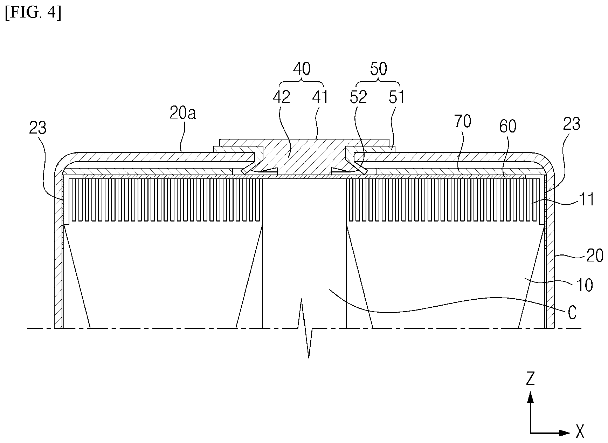

Referring to FIGS. 3 and 4, the first current collecting plate 60 is coupled to an upper portion of the electrode assembly 10. The first current collecting plate 60 is made of a conductive metal material and connected to the first electrode tab 11. Although not shown in the drawings, the first current collecting plate 60 may have a plurality of radially formed uneven portions on a lower surface thereof. When the uneven portions are formed, the first current collecting plate 60 may be pressed to press-fit the uneven portions into the first electrode tab 11.

Although not shown, the first current collecting plate 60 may be coupled to a coupled surface formed by bending an end of the first electrode tab 11 in a direction parallel to the first current collecting plate 60. A bent direction of the first electrode tab 11 may be, for example, a direction toward the winding center C of the electrode assembly 10. When the first electrode tab 11 has such a bent shape, a space occupied by the first electrode tab 11 can be reduced, thereby increasing an energy density. In addition, it is possible to increase the coupling force and reduce a resistance due to an increase in a coupling area between the first electrode tab 11 and the first current collecting plate 60.

Referring to FIGS. 3 and 4, the insulator 70 is provided between the first current collecting plate 60 coupled to the upper portion of the electrode assembly 10 and the inner surface of the battery can 20. The insulator 70 prevents the contact between the first current collecting plate 60 and the battery can 20.

Meanwhile, as shown in FIG. 1, when the insulator is formed in a cap shape having a side portion 3a interposed between an upper end of the outer circumferential surface of the electrode assembly and the inner surface of the battery can, it is also possible to prevent the contact between the first electrode tab and the battery can. However, in this case, the capacity can be reduced and the vibration characteristics can be reduced due to a thickness of the sidewall of the insulator by the side portion.

Therefore, in the present invention, the insulator is formed in a flat plate shape, for example, without the side portion to prevent only the contact between the first current collecting plate 60 and the battery can 20.

The first current collecting plate 60 may be a plate extending completely across the upper end of the outer circumferential surface of the electrode assembly 10. However, the present invention is not limited thereto, and the first current collecting plate 60 may also be formed to extend only partially across the upper end of the outer circumferential surface of the electrode assembly 10.

In the cylindrical secondary battery 100 according to one embodiment of the present invention, the terminal insertion portion 42 of the through terminal 40 may pass through the insulator 70 and may be coupled to the first current collecting plate 60. The insulator 70 may have an opening close to the winding center C. The terminal insertion portion 42 of the through terminal 40 may be in direct contact with the first current collecting plate 60 through the opening.

In the present invention, in order to increase capacity and improve vibration characteristics, an insulating coating layer 23 is provided along an inner circumferential surface of the sidewall of the battery can 20 facing the side portion of the first electrode tab 11 and the side portion of the first current collecting plate 60. In other words, the thin insulating coating layer 23 is provided on the battery can without making the side portion of the thick insulator, as shown in FIG. 1, not facing the battery can, the side portion of the first electrode tab, and the side portion of the first current collecting plate to replace an insulating function of the cap-shaped insulator. For example, a thickness of the side portion 3a of the insulator in FIG. 1 is 0.3 t (0.3 mm) and becomes 0.6 mm when thicknesses of the side portions on both sides are added. In other words, since the width of the electrode assembly in the cylindrical secondary battery 100 is reduced as much as this thickness, the battery capacity is reduced. In addition, since the thick side portion 3a is interposed between the electrode assembly and the battery can, the vibration characteristics are also degraded, such as an increase in vibration when vibrations are applied.

On the other hand, as shown in FIGS. 3 and 4, the insulating coating layer 23 is provided on an inner circumferential region of the sidewall of the battery can 20 facing the side portion of the first electrode tab 11 and the side portion of the first current collecting plate 60, the thickness of the insulating coating layer 23 may be determined in a range of about 3 to 100 µm. As described above, since the insulating coating layer 23 has a much smaller thickness than the insulator in FIG. 1, the width of the electrode assembly 10 can be further increased, thereby increasing the battery capacity. In addition, the vibration characteristics of the cylindrical secondary battery 100 can be further improved.

The insulating coating layer 23 may include one or more selected from the group consisting of epoxy, ceramic, and Teflon, but the present invention is not limited thereto. For example, the insulating coating layer 23 may be provided using other materials that may be used for electrical insulation from other metal materials in the metal battery can.

The insulating coating layer 23 may be applied on the inner wall of the battery can by, for example, a spray method, and other suitable coating methods may also be applied thereon.

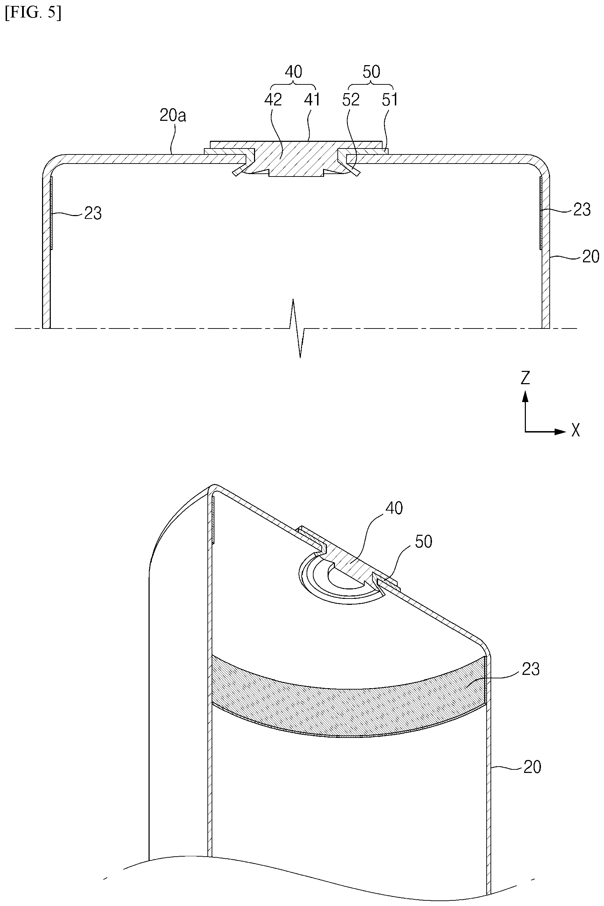

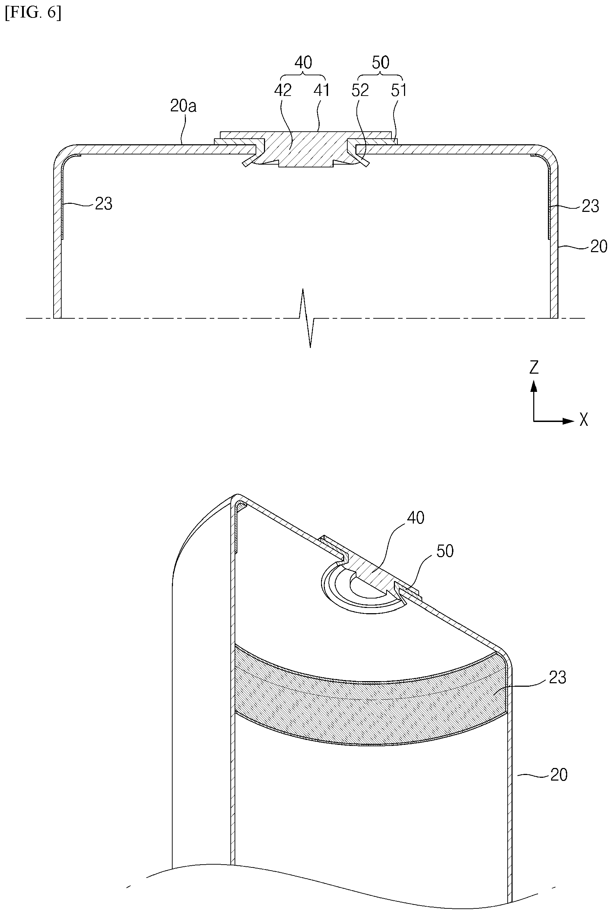

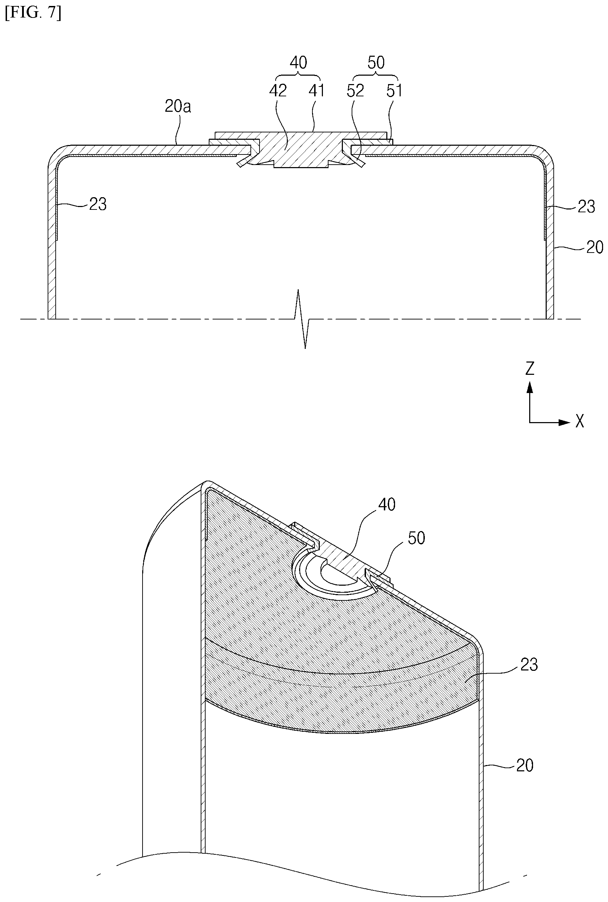

FIG. 5 is a partial cross-sectional view showing a formation position of the insulating coating layer, which is a main part of the present invention, and FIGS. 6 and 7 are partial cross-sectional views showing other examples of the formation position of the insulating coating layer, which is the main part of the present invention.

In FIGS. 5 to 7, the insulator, the first current collecting plate, and the electrode assembly are omitted to clearly show the formation position of the insulating coating layer.

Referring to FIG. 5, the insulating coating layer 23 is basically provided on a region facing the side portion of the first electrode tab 11 and the side portion of the first current collecting plate 60. In other words, when the insulator 70 insulates the upper portion of the first current collecting plate 60 from the battery can 20, the insulating coating layer 23 insulates the side portion of the first current collecting plate 60 from the battery can 20. Therefore, an upper region of the insulating coating layer 23 needs to be a region at least including the side portion of the first current collecting plate 60. In order to further ensure insulation between the first current collecting plate 60 and the battery can 20, as shown in FIG. 6, the insulating coating layer 23 may be provided to extend beyond the region facing the first current collecting plate 60.

In addition, the insulating coating layer 23 is applied along the inner circumferential surface of the sidewall of the battery can facing the side portion of the first electrode tab 11 in order to insulate the side portion of the first electrode tab 11 (the outer circumferential portion of the first electrode tab) from the battery can 20. Therefore, a lower region of the insulating coating layer 23 needs to be a region at least including the side portion of the first electrode tab 11. In order to further ensure insulation between the first electrode tab 11 and the battery can 20, it is preferable that the lower region of the insulating coating layer 23 is basically formed to exceed the region facing the first electrode tab 11 (see FIGS. 4 and 5).

Meanwhile, in order to further ensure insulation between the first current collecting plate 60 and the battery can 20, as shown in FIG. 7, the insulating coating layer 23 may also be provided to extend to an inner surface of an upper plate of the battery can exceeding the inner circumferential region of the sidewall of the battery can 20. However, in this case, since a rivet coupled portion of the through terminal 40 needs to be welded, the insulating coating layer needs to be provided only on the inner surface of the battery can 20 except for the rivet coupled portion.

A height of the insulating coating layer 23 may be determined according to a size of the battery, a height of the current collecting plate, and a height of the electrode tab. For example, as one embodiment, a height of the insulating coating layer 23 may be determined in a range of 5 mm or less. However, in order to obtain an insulating effect, the height of the insulating coating layer 23 is preferably 2 mm or more.

As shown in FIGS. 5 to 7, in a state in which the insulating coating layer 23 is previously applied at a predetermined position on the inner wall of the battery can 20, the electrode assembly 10, the first current collecting plate 60, the through terminal 40, and the like is coupled to the battery can 20, the cylindrical secondary battery 100 according to the present invention can be simply manufactured.

Referring to FIGS. 3 and 8, the second current collecting plate 80 is coupled to the lower portion of the electrode assembly 10. The second current collecting plate 80 is made of a conductive metal material and connected to the second electrode tab 12. In addition, the second current collecting plate 80 is electrically connected to the battery can 20. As shown in FIG. 8, the second current collecting plate 80 may be fixedly interposed between the inner surface of the battery can 20 and the airtightness gasket 90. Alternatively, the second current collecting plate 80 may be welded to an inner wall surface of the battery can 20.

Although not shown, the second current collecting plate 80 may be coupled to a coupled surface formed by bending the end of the second electrode tab 12 in a direction parallel to the second current collecting plate 80. The bending direction of the second electrode tab 12 may be, for example, a direction toward the winding center C of the electrode assembly 10. When the second electrode tab 12 has the bent shape as described above, a space occupied by the second electrode tab 12 can be reduced, thereby increasing an energy density. In addition, due to an increase in a coupling area between the second electrode tab 12 and the second current collecting plate 80, a coupling force can be increased and a resistance can be reduced.

Referring to FIGS. 3 and 4, the cylindrical secondary battery 100 according to one embodiment of the present invention includes the through terminal 40 having the first polarity and the second electrode terminal 20a electrically insulated from the through terminal 40 and having the second polarity, which are both provided on one side thereof in a longitudinal direction (direction parallel to the Z-axis). In other words, since a pair of electrode terminals 40 and 20a is positioned in the same direction in the cylindrical secondary battery 100 according to one embodiment of the present invention, when the plurality of cylindrical secondary batteries 100 are electrically connected, electrical connection components, such as a bus bar, may be disposed on only one side of the cylindrical secondary battery 100. Therefore, it is possible to simplify the battery pack structure and increase the energy density.

In addition, the cylindrical secondary battery 100 may have a structure in which one surface of the battery can 20 having a substantially flat shape may be used as the second electrode terminal 20a, thereby securing a sufficient bonding area in bonding the electrical connection components, such as a bus bar, to the second electrode terminal 20a. Therefore, in the cylindrical secondary battery 100, it is possible to secure the sufficient bonding strength between the electrical connection components and the second electrode terminal 20a and reduce a resistance on the bonded portion to a desired level.

In addition, in the cylindrical secondary battery 100 according to the present invention, the thin insulating coating layer 23 may be formed on the inner wall of the battery can to increase the width of the electrode assembly 10 facing the insulating coating layer 23, thereby increasing the battery capacity and preventing the degradation of the vibration characteristics.

In addition, the cylindrical secondary battery 100 of the present invention relates to a so-called tab-less type cylindrical battery in which the first current collecting plate 60 is directly coupled to the through terminal 40 and does not require a tab. Conventional cylindrical secondary battery generally has a structure in which a tab connecting a jelly-roll type electrode assembly to an external terminal is connected by being welded to a foil of the j elly-roll electrode assembly. A cylindrical secondary battery having such a structure has a limited current path, and the resistance of the jelly-roll itself is inevitably very high. Accordingly, a method of lowering the resistance by increasing the number of tabs connecting the j elly-roll to the external terminal has been tried, but increasing the number of tabs had a limit in lowering the resistance to a desired level and securing a sufficient current path. As shown in FIGS. 3 and 4, the present invention electrically connects the first current collecting plate to the through terminal without a tab by directly coupling the first current collecting plate 60 to the through terminal 40, thereby solving the problems in the prior art. In addition, such coupling method has an advantage of improving the safety of the battery by insulating between the first current collecting plate and the battery can, which has a high possibility of generating heat, with the above-described insulating coating layer 23.

Preferably, the cylindrical battery cell is a cylindrical battery cell having, for example, a ratio of a form factor (defined as a value obtained by dividing a diameter of a cylindrical battery cell by a height thereof, that is, a ratio of a diameter (Φ) to a height (H)) that is greater than about 0.4.

Here, the form factor means a value representing a diameter and height of the cylindrical battery cell. The cylindrical battery cell according to one embodiment of the present invention may be, for example, a 46110 cell, a 48750 cell, a 48110 cell, a 48800 cell, or a 46800 cell. In the numerical values representing the form factor, the first two numbers indicate a diameter of the cell, the next two numbers indicate a height of the cell, and the last number 0 indicates that a cross section of the cell is circular.

The battery cell according to one embodiment of the present invention may be a substantially cylindrical battery cell having a diameter of about 46 mm, a height of about 110 mm, and a form factor ratio of about 0.418 as a substantially cylindrical battery cell.

A battery cell according to another embodiment may be a cylindrical battery cell having a diameter of about 48 mm, a height of about 75 mm, and a form factor ratio of about 0.640 as a substantially cylindrical battery cell.

A battery cell according to still another embodiment may be a cylindrical battery cell having a diameter of about 48 mm, a height of about 110 mm, and a form factor ratio of about 0.418 as a substantially cylindrical battery cell.

A battery cell according to yet another embodiment may be a cylindrical battery cell having a diameter of about 48 mm, a height of about 80 mm, and a form factor ratio of about 0.600 as a substantially cylindrical battery cell.

A battery cell according to yet another embodiment may be a cylindrical battery cell having a diameter of about 46 mm, a height of about 80 mm, and a form factor ratio of about 0.575 as a substantially cylindrical battery cell.

Conventionally, battery cells having a form factor ratio of about 0.4 or less have been used. In other words, conventionally, for example, a 18650 cell, a 21700 cell, and the like have been used. The 18650 cell has a diameter of about 18 mm, a height of about 65 mm, and a form factor ratio of about 0.277.

The 21700 cell has a diameter of about 21 mm, a height of about 70 mm, and a form factor ratio of about 0.300.

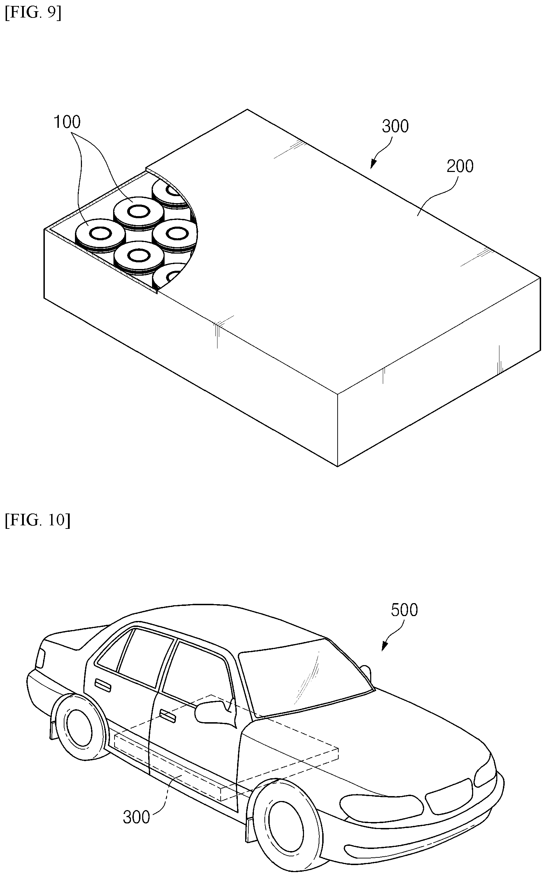

Referring to FIG. 9, a battery pack 300 according to one embodiment of the present invention includes a secondary battery assembly in which the plurality of cylindrical secondary batteries 100 according to one embodiment of the present invention are electrically connected and a pack housing 200 for accommodating the secondary battery assembly. In the drawings of the present invention, components, such as a bus bar, a cooling unit, and a power terminal for electrical connection, are omitted for convenience of illustration.

Referring to FIG. 10, a vehicle 500 according to one embodiment of the present invention may be, for example, any of electric vehicles, hybrid electric vehicles, or plug-in hybrid electric vehicles and includes the battery pack 300 according to one embodiment of the present invention. The vehicle 500 includes a four-wheel drive vehicle and a two-wheel drive vehicle. The vehicle 500 is operated by receiving power from the battery pack 300 according to one embodiment of the present invention.

Although the present invention has been described above with reference to limited embodiments and drawings, the present invention is not limited thereto, and it goes without saying that various modifications and changes are possible by those skilled in the art to which the present invention pertains without departing from the technical spirit of the present invention and the equivalent scope of the appended claims.

### [Description of reference numerals]

10: Electrode assembly
C: Winding center
11: First electrode tab
12: Second electrode tab
20: Battery can
21: Beading portion
22: Crimping portion
23: Insulating coating layer
30: Cap plate
31: Venting portion
40: Through terminal
41: Terminal portion
42: Insertion portion
50: Insulating gasket
60: First current collecting plate
70: Insulator
80: Second current collecting plate
90: Airtightness gasket
100: Cylindrical secondary battery
200: Pack housing
300: Battery pack
500: Vehicle

## Claims

1. A cylindrical secondary battery comprising:
an electrode assembly including a first electrode tab and a second electrode tab;
a battery can configured to accommodate the electrode assembly and electrically connected to the electrode assembly;
a through terminal passing through one surface of the battery can and electrically connected to the electrode assembly;
a first current collecting plate having a first surface coupled to the first electrode tab and a second surface coupled to the through terminal;
an insulator interposed between the first current collecting plate and the battery can; and
a cap plate covering an opening of the battery can,
wherein an insulating coating layer is provided along an inner circumferential surface of a sidewall of the battery can facing a side portion of the first electrode tab and a side portion of the first current collecting plate.

2. The cylindrical secondary battery of claim 1, wherein the through terminal is electrically connected to the first electrode tab having a first polarity, and
the battery can is electrically connected to the second electrode tab having a second polarity different from the first polarity.

3. The cylindrical secondary battery of claim 1, wherein the through terminal is positioned on a central portion of the one surface of the battery can positioned on an opposite side of the opening.

4. The cylindrical secondary battery of claim 1, wherein the through terminal includes:
a terminal exposure portion extending outward from the battery can; and
a terminal insertion portion passing through an upper surface of the battery can.

5. The cylindrical secondary battery of claim 1, wherein the through terminal is rivet-coupled to an inner surface of the battery can.

6. The cylindrical secondary battery of claim 4, wherein a central region of the terminal insertion portion is coupled to the first current collecting plate.

7. The cylindrical secondary battery of claim 1, wherein the through terminal passes through the insulator and is coupled to the first current collecting plate.

8. The cylindrical secondary battery of claim 7, wherein the insulator is formed in a flat plate shape having a through hole through which the through terminal passes.

9. The cylindrical secondary battery of claim 1, wherein the insulating coating layer is provided to extend to the inner circumferential surface of the sidewall of the battery can and/or an inner surface of an upper plate of the battery can so as to exceed an inner circumferential region of the sidewall of the battery can facing the side portion of the first electrode tab and the side portion of the first current collecting plate.

10. The cylindrical secondary battery of claim 1, wherein the insulating coating layer includes one or more selected from the group consisting of epoxy, ceramic, and Teflon.

11. The cylindrical secondary battery of claim 1, further comprising an insulating gasket interposed between the battery can and the through terminal to insulate the through terminal from the battery can.

12. The cylindrical secondary battery of claim 11, wherein the insulating gasket includes:
a gasket exposure portion extending outward from the battery can; and
a gasket insertion portion passing through an upper surface of the battery can.

13. The cylindrical secondary battery of claim 1, wherein the cap plate includes a venting portion which is broken when an internal pressure of the battery can is increased to a certain level or more and through which a gas is discharged.

14. A battery pack comprising:
a plurality of cylindrical secondary batteries identical to the cylindrical secondary battery of any one of claims 1 to 13; and
a pack housing configured to accommodate the plurality of cylindrical secondary batteries.

15. A vehicle comprising the battery pack of claim 14.
